Europäisches Patentamt

European Patent Office

Office européen des brevets

(19)

(11) **EP 0 957 613 A1**

(12) **EUROPÄISCHE PATENTANMELDUNG**

(43) Veröffentlichungstag:
**17.11.1999 Patentblatt 1999/46**

(51) Int. Cl.⁶: $H04L\ 12/56$, $H04L\ 29/06$

(21) Anmeldenummer: 98108681.2

(22) Anmeldetag: 13.05.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(71) Anmelder:
**TELEFONAKTIEBOLAGET LM ERICSSON
126 25 Stockholm (SE)**

(72) Erfinder:
• **Meyer, Michael
33100 Paderborn (DE)**
• **Groenstad, Ashild
0376 Oslo (NO)**

(74) Vertreter: **Mohsler, Gabriele
Ericsson Eurolab Deutschland GmbH,
Research Department,
Ericsson Allee 1
52134 Herzogenrath (DE)**

(54) **Verfahren und Vorrichtung zur Erhöhung eines Datendurchsatzes**

(57) Die Erfindung betrifft ein Verfahren und eine Vorrichtung zur Erhöhung eines Datendurchsatzes bei Anwendungen aus Netzen zur Datenübermittlung hoher Geschwindigkeit, beispielsweise dem Internet, über ein paketorientiertes, schnurloses Datennetzwerk, beispielsweise dem GPRS Netz. Von der Internetanwendung werden Daten in Form von Datenpaketen (n,n+1,n+2,n+3...) bereitgestellt (a). Bei einer Übertragung über das Internet (g) werden die Datenpakete über unterschiedliche Wege übertragen, weshalb die Datenpakete in falscher Reihenfolge an einem Zwischenknoten dem GPRS-Netzwerk zur Verfügung stehen (c). Ebenfalls gehen Datenpakete verloren, die nach erneuter Anforderung ebenfalls in falscher Reihenfolge zur Verfügung stehen. Aufgrund unterschiedlicher Bandbreite steht eine Anzahl an Datenpakete an dem Zwischenknoten des GPRS Netzes zum Senden zur Verfügung während ein erstes Datenpaket gesendet wird (d). Die Reihenfolge der zur Verfügung gestellten Datenpakete wird ermittelt (e) und die Datenpakete werden sortiert (f), um in sortierten Reihenfolge zum Senden zur Verfügung zu stehen.

Fig. 1

**Beschreibung**

Die Erfindung betrifft ein Verfahren und eine Vorrichtung zur Erhöhung eines Datendurchsatzes bei Anwendungen aus Netzen zur Datenübermittlung hoher Geschwindigkeit über ein paketorientiertes, schnurloses Datennetzwerk.

Ein bekanntes Netz zur Datenübermittlung mit hoher Geschwindigkeit sind Paket-Datennetzwerke, wie beispielsweise das Internet. Das Internet ist ein weltumspannendes Netz, das sich aus einer Vielzahl von einzelnen lokalen Netzen zusammensetzt, die über Festoder Wählverbindungen mit anderen Netzen vernetzt sind. Desweiteren wird das Internet durch die Verwendung eines Internet Protokolls (IP) und dessen Adressierung definiert. Eine zugeordnete Protokollfamilie, die sogenannte TCP/IP (Transmission Control Protokol /Internet Protokol), wird ebenfalls im Internet verwendet und bildet ein wesentliches Merkmal des Internets. Die Vernetzung unter Verwendung des Internet Protokolls bildet das Internet. Desweitern wird das Internet von keiner zentralen Stelle aus gewartete oder gesteuert. Für das internationale Routing sorgen spezielle Server. Die Struktur des Netzes an sich läßt sich aufgrund der ungeplant gewachsenen Struktur nicht darstellen und ist unbekannt. Der Weg von zu übertragenden Datenpaketen ist daher nicht vorherbestimmbar, sie werden von Router zu Router gereicht, wobei manchmal auch Umwege eingeschlagen werden. Da desweiteren aufeinanderfolgende Datenpakete einer Anwendung unterschiedliche Wege einschlagen Können, treffen aufeinanderfolgend gesendete Datenpakete zu unterschiedlichen Zeiten bei der Zieladresse ein.

Im Internet wird die Zustellung der Datenpakete sowie deren Reihenfolge durch den TCP (Transmission Control Protokol)-Dienst garantiert. Von dem Empfänger werden positive Quittungen an den Sender gegeben, oder die Wiederholung von beschädigten oder verlorenen Datenpaketen wird angefordert. Alle gesendeten Datenpakete werden fortlaufend nummeriert, um den Verlust einzelner Datenpakete erkennen, oder verlorene Datenpakete neu anfordern zu können. Auf der Empfängerseite werden die Datenpakete wieder zusammengesetzt. Da das Internet-Protokoll (IP) auf dem verbindungslosen Transport von Daten beruht, können beim Transport einzelne Datenpakete verlorengehen oder in der falschen Reihenfolge beim Empfänger eintreffen. Zur Aufgabe des TCP gehört die Wiederholung von Datenpaketen, wenn der Empfang nicht innerhalb einer festgelegten Zeit bestätigt wurde („Technik der Netze"; G. Siegmund; R.v.Decker's Verlag; Heidelberg 1996; Kapitel 6).

Bei einer Anwendung aus Netzen zur Datenübermittlung hoher Geschwindigkeit über ein paketorientiertes Datennetzwerk, treten die Datenpakete beispielsweise an einem Zwischenknoten zwischen den beiden Netzen auf und werden an diesem wegen der unterschiedlichen Bandbreite der Netze in einer Warteschlange aufgereiht und entsprechend dem Eintreffen zum Senden zur Verfügung gestellt. Gemäß der Ausführungen im Stand der Technik wird ein Datenpaket jedes mal wieder angefordert, wenn ein Empfang nicht binnen einer festgelegten Zeit bestätigt wird. Dennoch besteht die Möglichkeit, daß das Datenpaket bereits in dem Zwischenknoten empfangen wurde, nur daß es in der falschen Reihenfolge, d.h. zu einem späteren Zeitpunkt dem weiteren Senden zur Verfügung steht. Das wiederholte Anfordern verursacht demgemäß eine zusätzliche Last, die unnötig ist, da das fehlende Datenpakete bereits vorhanden ist und in der Warteschlange auf das weiter Senden wartet.

Desweiteren wird bei der Anforderung zum Senden eines oder mehrerer fehlender Datenpakete, das erneut gesendete Datenpaket in der Reihenfolge hinten angestellt, weshalb ein sogenannter Time-out erfolgen kann. Der Time-out führt dazu, daß die Übertragung gestoppt. Um nach einem solchen Time-out die Übertragung erneut zu starten, ist ein Startmechanismus notwendig, der langsam ist und insgesamt wird dadurch der Datendurchsatz verringert.

Demgemäß ist es Aufgabe der vorliegenden Erfindung, ein Methode und eine Vorrichtung zu schaffen, die unnötiges Wiederanfordern von Datenpaketen vermeidet und die Time-outs vermeidet.

Dies wird erfindungsgemäß gelöst durch die Lehre des Patentanspruchs 1 und durch die Lehre des Patentanspruchs 13.

Vorteilhaft erweist sich hierbei, daß eine unnötige Last vermieden wird, indem Datenpakete, die bereits vorhanden sind nicht mehr erneut angefordert werden und demgemäß den Datendurchsatz verringern.

Ebenfalls vorteilhaft erweist sich hierbei, daß durch die Vermeidung von Time-outs der Datendurchsatz erhöht wird.

Ein weiterer Vorteil ist, daß Datenpakete bereits an einem Zwischenknoten sortiert werden und für das Senden bereits sortiert zur Verfügung stehen.

Weitere vorteilhafte Ausgestaltungen sind den Patentansprüchen 2 bis 12 und 14 bis 15 zu entnehmen.

Besonders vorteilhaft erweist sich gemäß Patentanspruch 2, daß zu jedem Zeitpunkt die Datenpakete sortiert vorliegen und somit ein erneutes Anfordern zu jeder Zeit vermieden werden kann.

Ebenfalls vorteilhaft erweist sich gemäß Patentanspruch 3, daß eine gewisse Anzahl an Datenpaketen sortiert wird und ein erneutes Sortieren erst nach dem Senden dieser Datenpakete wieder erfolgt. Demgemäß wird das Sortieren weiter optimiert.

Im folgenden wird die Erfindung anhand von Ausführungsbeispielen und anhand der Figuren näher erläutert.

Folgende Figuren zeigen:

Fig. 1          Ablaufdiagramm eines erfindungs-

Fig. 2: Ablaufdiagramm einer Ausgestaltung des erfindungsgemäßen Verfahrens gemäß Anspruch 4,

Fig. 3: GPRS Architektur,

Fig.4a + b: Darstellung eines Ausführungsbeispiels mit verlorengegangenen Datenpaketen,

Fig. 5: Darstellung eines Ausführungsbeispiels mit Datenpaketen in falscher Reihenfolge.

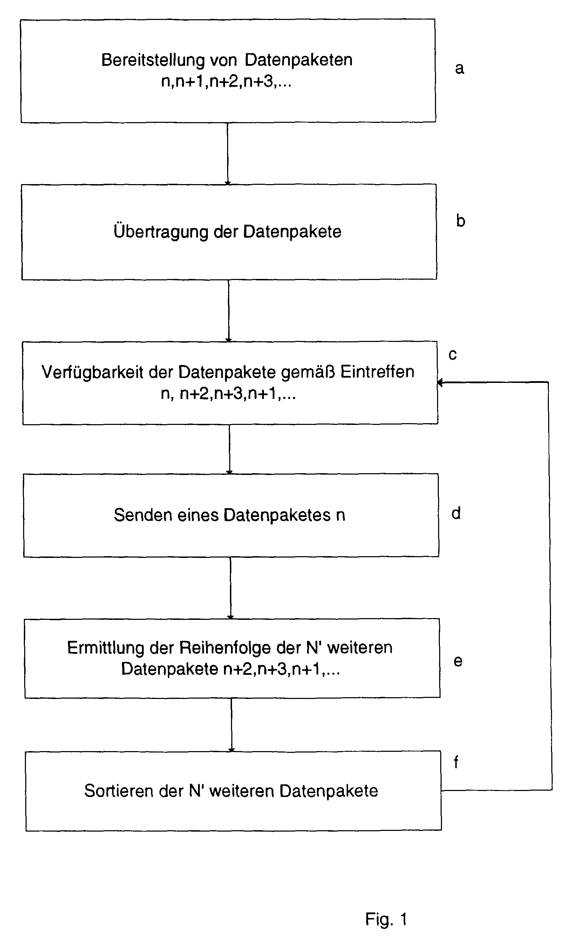

Im folgenden wird die Erfindung anhand eines Ausführungsbeispieles und anhand von Figur 1 näher erläutert.

Von Anwendungen aus Netzen zur Datenübermittlung hoher Geschwindigkeit, wie dem Internet, werden Daten in Form von Datenpaketen bereitgestellt. Die Daten setzen sich dabei aus einer Vielzahl aufeinanderfolgender Datenpakete n,n+1,n+2,n+3,... zusammen. Eine weitere Übertragung und Bereitstellung der Datenpakete an einem paketorientierten, schnurlosen Datennetzwerke, wie z. B. einem GPRS-Netzwerk, führt dazu, daß aufgrund der unterschiedlichen Bandbreite der Netzwerke, Datenpakete des Netzes zur Datenübermittlung hoher Geschwindigkeit schneller zum Senden zur Verfügung gestellt werden, als diese von dem schnurlosen, paketorientierten Datennetzwerk gesendet werden. Demgemäß liegt dort eine Anzahl an Datenpaketen vor, die zum Senden verfügbar sind. Aufgrund der Art der Übertragung der Datenpakete im Internet, wie dies bereits im Stand der Technik eingehend erläutert wurde, treffen Datenpakete in unterschiedlicher Reihenfolge am schnurlosen, paketorientierten Datennetzwerk ein, Datenpakete werden inkorrekt übertragen und werden dann erneut angefordert oder es gehen gar einzelne oder mehrere Datenpakete verloren, die nach erneuter Anforderung ebenfalls in falscher Reihenfolge verfügbar sind.

Gemäß Figur 1 werden in einem ersten Schritt a Datenpakete n,n+1,n+2,n+3,... von der Anwendung bereitgestellt, indem die Daten in eine Anzahl aufeinanderfolgender Datenpakete aufgeteilt werden. Die Datenpakete n,n+1,n+2,n+3,... werden an das schnurlose, paketorientierte Datennetzwerk in einem weiteren Schritt b übertragen. Entsprechend des Eintreffens werden in einem nächsten Schritt c die Datenpakete zum Senden in dem schnurlosen, paketorientierten Datennetzwerk zur Verfügung gestellt. In dem gewählten Beispiel treffen die Datenpakete in der Reihenfolge n, n+2,n+3,n+1,... ein. Demgemäß trifft das Datenpaket n+1 verspätet ein.

In einem folgenden Schritt d wird ein Datenpaket n gesendet. Dieses entspricht einem ersten zum Senden bereitgestellten Datenpaket. Die Verwendung des ersten Datenpaketes ist nur beispielhaft, da jedes weitere Datenpaket ebenfalls gesendet wird. Das Senden der Datenpakete erfolgt vorzugsweise direkt nach dem Eintreffen und Bereitstellen der Datenpakete. Da aber aus vorgenannten Gründen ein Senden über das schnurlose, paketorientierte Datennetzwerk wegen der geringeren Bandbreite einen längeren Zeitraum benötigt, wird immer noch das erste Datenpaket gesendet, wenn die weiteren Datenpakete bereits zum Senden bereitgestellt sind. Dies setzt sich auch bei dem Senden eines jeden weiteren Datenpaketes derart fort, daß jeweils eine Anzahl an Datenpaketen zum Senden bereitgestellt ist.

In einem nächsten Schritt e wird die Reihenfolge der N' weiteren, also der bereits zur Verfügung gestellten Datenpakete ermittelt. Auf die Verfahren mittels deren die Reihenfolge der Datenpakete bestimmt wird, wird an anderer Stelle näher eingegangen. Wie bereits zuvor erläutert, werden die N' weiteren Datenpakete beispielsweise in der Reihenfolge n+2,n+3,n+1,... zur Verfügung gestellt. Demgemäß wird bei der Ermittlung der Reihenfolge festgestellt, daß das nächste zur Verfügung gestellte Datenpaket n+2 auf das Datenpaket n zu folgen hat. Desweiteren wird festgestellt, daß das weitere zur Verfügung gestellte Datenpaket n+3 auf das Datenpaket n+2 zu folgen hat. Bei Überprüfung des nächsten zur Verfügung gestellten Datenpaketes n+1 wird festgestellt, daß dieses nicht auf das Datenpaket n+3 zu folgen hat, ebenso wie festgestellt wird, daß das Datenpaket nicht auf das Datenpaket n+2 zu folgen hat, sondern gemäß der von der Anwendung zur Verfügung gestellten Reihenfolge bereits dem Datenpaket n zu folgen hat.

In einem weiteren Schritt f werden die N' Datenpakete entsprechend der Reihenfolge sortiert. Demnach wird das Datenpaket n+1 an die richtige Stelle nach dem Datenpaket n und vor das Datenpaket n+2 sortiert. Dies erfolgt beispielsweise durch umkopieren der Datenpakete. Jede weitere mögliche Sortierung soll hier auch umfaßt sein, wie beispielsweise ein Setzen von Zeigern auf Datenpakete.

Die sortierten Datenpaket werden demgemäß zur Übertragung über das schnurlose, paketorientierte Datennetzwerk, gemäß Schritt c, in der richtigen Reihenfolge zur Verfügung gestellt.

Das beschriebene Verfahren sortiert sowohl Datenpakete die lediglich in falscher Reihenfolge eintreffen, als auch Datenpakete die beschädigt sind oder die verloren gegangen sind und erneut angefordert werden. Wie bereits zuvor erläutert, können Datenpakete verloren gehen oder aber beschädigt zur Verfügung gestellt werden. Ein Datenpaket das verloren gegangen oder beschädigt ist wird erneut angefordert und wird demgemäß erneut zur Verfügung gestellt. Hierbei resultiert dabei aber ebenfalls ein zur Verfügung stellen in falscher Reihenfolge, weshalb das erneut angeforderte Datenpaket ebenfalls einsortiert wird.

Ebenfalls ist es möglich, daß mehrere Datenpakete verloren gegangen sind. Dies können entweder direkt aufeinanderfolgende oder aber auch weiter auseinanderliegende Datenpakete sein. Das Anfordern eines oder mehrerer verlorener Datenpakete ist beispielsweise ein Mechanismus in TCP (Transmission Control Protocol).

Da während des Sortierens bereits weitere Datenpakete eingetroffen sind, werden in einer Ausführungsform die neuen Datenpakete und ebenfalls die bereits sortierten Datenpakete erneut sortiert, nachdem die Reihenfolge der weiteren Datenpakete bestimmt wurde. Demgemäß werden die im Schritt c bereitgestellten Datenpakete zu jedem Zeitpunkt sortiert, also eintreffende Datenpaket werden bereits direkt richtig sortiert.

In einer weiteren Ausführungsform wird zuerst eine Anzahl an Datenpaketen, die während des Sendens eines ersten Datenpaketes vorhanden sind, sortiert. Diese Datenpakete werden zum weiteren Senden in der richtigen Reihenfolge, also der Reihenfolge entsprechend der Anwendung, bereitgestellt. Ein weiteres Sortieren ist beispielsweise demgemäß erst wieder notwendig, wenn diese Datenpakete alle gesendet wurden. Daraus resultiert, daß beispielsweise nach Senden einer Anzahl P' von Datenpaketen ein erneutes Ermitteln der Reihenfolge erfolgt und daraufhin erneut sortiert wird. Hierbei ist beispielsweise $P'=N'-1$, mit $N'=2,3,4,....$

Die Schritte d und e gemäß des beispielhaft erläuterten Verfahrens sind beliebig vertauschbar. So ist eine Ermittlung der Reihenfolge der weiteren Datenpakete gemäß Schritt e bereits vor dem Senden des ersten oder jeden weiteren Datenpaketes gemäß Schritt d möglich.

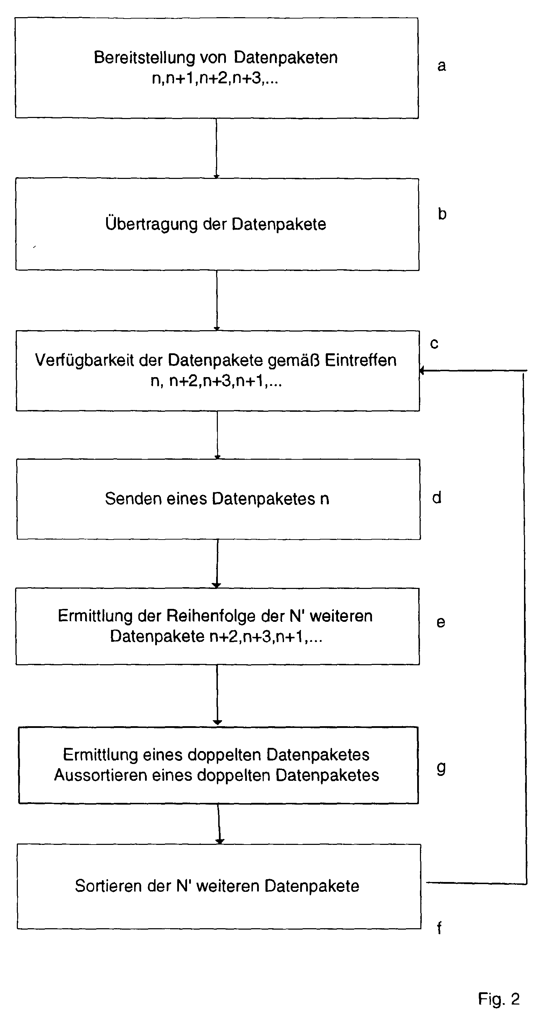

Im folgenden wird anhand von Figur 2 eine Ausgestaltung der Erfindung gemäß Patentanspruch 4 näher erläutert.

Ein Verfahren nach Patentanspruch 4 weist ebenfalls die Schritte a bis e auf, wie diese anhand von Figur 1 erläutert wurden. Zusätzlich zu der Ermittlung der Reihenfolge gemäß Schritt e, wird festgestellt, ob ein Datenpaket mehrfach vorhanden ist, Schritt g. Ein mehrfach vorhandenes Datenpaket kann daraus resultieren, daß ein Datenpaket erneut angefordert wurde, obwohl es nicht verloren gegangen ist, sondern nur verspätet zur Verfügung gestellt wird. Es kommt beispielsweise vor, daß ein Datenpaket derart verspätet eintrifft, daß es bereits als verloren erkannt wurde und erneut angefordert wurde. Nachdem das erneut angeforderte Datenpaket zur Verfügung gestellt wird und das verspätete Datenpaket eintrifft, steht ein bestimmtes Datenpaket doppelt zur Verfügung.

Ein solcherart doppelt zur Verfügung gestelltes Datenpaket wird gemäß Schritt g erkannt und eines der Datenpakete wird aussortiert. Das verbleibende Datenpaket wird gemäß Schritt f sortiert und steht danach gemäß Schritt c in sortierter Reihenfolge zur Verfügung.

Im folgenden wird anhand eines Ausführungsbeispieles eine möglich Anwendung der Erfindung näher erläutert.

Ein mögliches Einsatzgebiet der Erfindung ist im Bereich der Internetanwendungen über beispielsweise ein schnurloses, paketorientiertes Datennetzwerk, beispielsweise GPRS (General Packet Radio Service) oder UMTS (Universal Mobile Telecommunications System) zu sehen. Eine Anwendung soll hierbei ebenfalls auch im Bereich aller paketorientierten Netzwerke, also auch der schnurgebundenen, paketorientierten Netzwerke gesehen werden. Im folgenden wird hauptsächlich auf schnurlose, paketorientierte Datennetzwerk eingegangen. Eine mögliche Internetanwendung könnte beispielsweise das Bereitstellen von World-Wide-Web Seiten, kurz WWW Seiten sein.

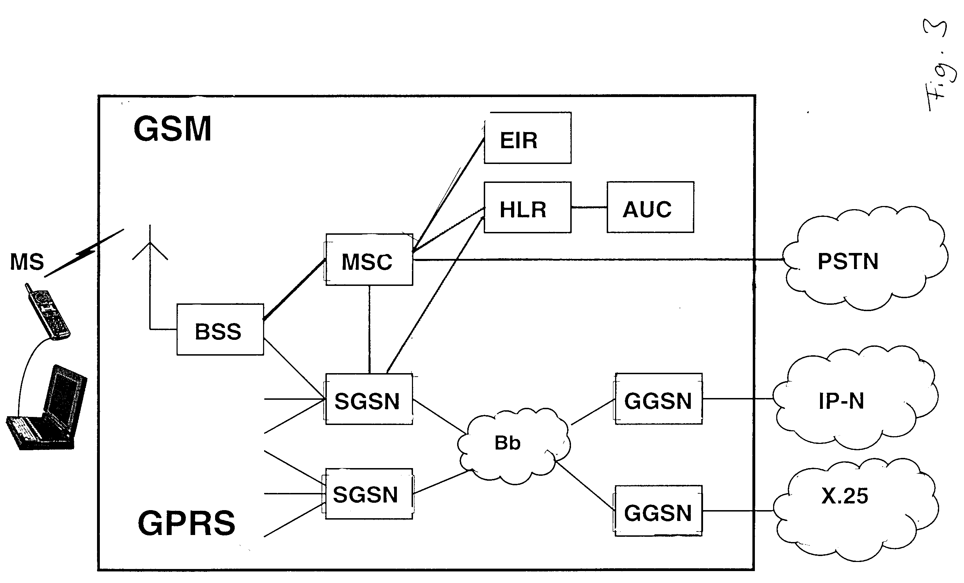

Im folgenden wird anhand von Figur 3 die Architektur des GPRS Netzwerkes kurz erläutert. Ein mobiler Teilnehmer MS weist beispielsweise einen tragbaren Personal Computer und ein mobiles Telefon oder eine mobile Einheit auf. Der PC und das mobile Telefon stehen miteinander in Verbindung entweder über einen Kabel oder ebenfalls über eine schnurlose Verbindung. Der mobile Teilnehmer ist mit einem GPRS Netzwerk verbunden. Ein GPRS Netzwerk ist gemäß der Figur in Zusammenhang mit einem GSM (Global System for Mobile Communication) Netzwerk dargestellt. Dies entspricht insofern der Realität, als daß ein GPRS Netzwerk einzelne Einheiten und Speicher des GSM Netzwerkes nutzt. Beiden gemeinsam ist ein Basisstationssubsystem BSS, das von beiden Netzwerken gemeinsam genutzt wird. Über das Basisstationssubsystem BSS ist der mobile Teilnehmer MS mit dem Netzwerk verbunden. Das GSM Netzwerk weist weiterhin eine Mobilfunkvermittlungsstelle MSC auf, die mit dem Basisstationssubsystem BSS verbunden ist und über die das GPRS Netzwerk mit dem GSM Netzwerk in Verbindung steht. Ebenfalls wird über die Mobilfunkvermittlungsstelle eine Verbindung zu einem öffentlichen Fernsprechnetz PSTN hergestellt. Das GSM Netzwerk weist weiterhin eine Gerätedatenbank EIR und eine Heimatdatei HLR mit einer Beglaubigungsdatei (Authentifizierungsdatei) AUC auf. Diese sind hier der Vollständigkeit halber aufgeführt, da das GPRS Netzwerk Daten aus diesen Dateien erhält und verwendet.

Das GPRS Netzwerk weist weiterhin einen oder mehrere GPRS Diensteunterstützungsknoten SGSN (Serving GPRS Support Node), im folgenden kurz SGSN Knoten genannt, auf. Die SGSN Knoten sind über ein sogenanntes Backbone Netzwerk Bb mit einem oder mehreren Netzübergangs GPRS Unterstützungsknoten GGSN (Gateway GPRS Support Node), im folgenden kurz GGSN Knoten genannt, verbunden. Der GGSN Knoten stellt eine Verbindung zu weiteren Netzen her, wie beispielsweise zu einem Netz das nach dem X.25 Standard arbeitet X.25 oder aber zu einem Netz das auf die Internetprotokollstruktur aufbaut.

Ein Benutzer einer solchen Architektur ist beispielsweise der Nutzer des PCs, wie in dem aufgeführten Beispiel der Nutzer eines tragbaren PCs. Über ein mobiles Endgerät MS oder über eine entsprechende weitere Verbindungsmöglichkeit ist der tragbare PC mit dem GPRS Netzwerk verbunden. Der Benutzer wünscht nun eine Internetanwendung auf seinem PC angezeigt zu erhalten. Diese ist beispielsweise in dem Internet IP-N oder in dem nach dem X.25 Standard arbeitenden Netz X.25 verfügbar. Das Internet stellt die Anwendung als Daten in Form von Datenpaketen zur Verfügung. Diese werden an dem SGSN Knoten als Zwischenknoten zur Verfügung gestellt.

Eine Berechtigung zum Aufrufen von Diensten sowie eine Berechtigung zum Einwählen in die Netze wird durch die Dateien im GSM Netzwerk ermöglicht. Da dies kein für die Erfindung wesentlicher Punkt ist, vielmehr bekannt ist aus der Authentifizierung und Identifizierung im GSM Netzwerk, soll hier nicht weiter darauf eingegangen werden, vielmehr sollen die im GSM Netzwerk bekannten Mechanismen für die Nutzung auch über GPRS hier mit eingeschlossen sein.

Im folgenden wird (ohne Figur) auf eine Protokollstruktur eingegangen, die ein Sortieren von Datenpaketen unterstützt.

Wie bereits zuvor erläutert, weist das GPRS Netzwerk einen Diensteunterstützungsknoten SGSN auf. Diese Knoten sind in verschiedene Schichten, sogenannte Layer aufgeteilt, wie sie auch schon aus dem Bereich des ISDN bekannt sind. Der vorgenannte Netzübergangs GPRS Unterstützungsknoten weist ebenfalls, wie auch die mobile Station MS, sowie auch das Basisstationssubsystem BBS sowie eine Rechnerschnittstelle, auf der Seite des Internets eine Schichtenaufteilung auf. Ein LLC (Logical Link Control) Protokoll, das sich in der mobilen Station MS und in dem SGSN Knoten befindet, stellt dabei eine logische Verbindung zwischen der Station und dem SGSN Knoten her. Das LLC Protokoll arbeitet beispielsweise in einem Modus in dem ein Empfang bestätigt wird, ein sogenannter Acknowledged-Modus. In diesem Modus wird ein korrektes Senden der Daten sichergestellt. Dies erfolgt beispielsweise dadurch, daß mittels dieses LLC Protokolls eine erneute Anforderung eines Datenpaketes angefordert wird.

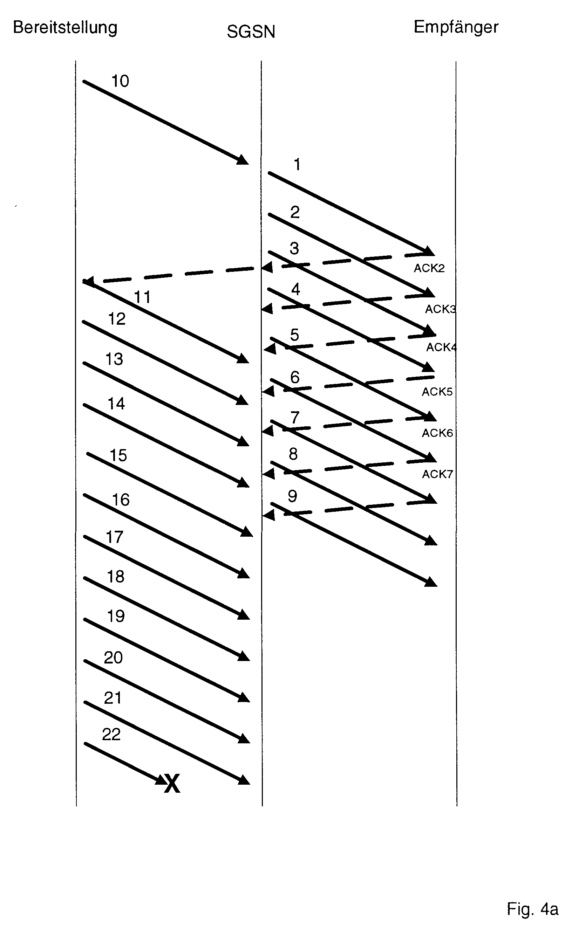

Im folgenden wird anhand der Figuren 4a bis 4b ein Ausführungsbeispiel der Erfindung näher erläutert. Hierbei wird auf die Erfindung eingegangen für den Fall, daß eines oder mehrere Datenpakete verloren gehen und somit nicht zur Übertragung bereitstehen. Wie bereits zuvor erläutert, wird nach Feststellung des Fehlens eines Datenpaketes eine neues Datenpaket angefordert und steht in falscher Reihenfolge zum Senden zur Verfügung.

In allen Figurteilen wird ein Datenpaket als Pfeil dargestellt, der eine bestimmte Nummer trägt. Die Pfeile sind der Reihenfolge nach numeriert. Die Numerierung der Pfeile, die hier der Einfachheit halber als einfache, natürliche Zahl gewählt wurde, gibt an, welches Datenpaket aus einer Vielzahl von Datenpaketen vorliegt. Desweiteren ist ein kurzer Pfeil dargestellt, der in einem Kreuz X endet. Dies ist dargestellt, um anzuzeigen, daß ein Datenpaket nicht zum Senden bereitgestellt wurde, also verloren gegangen ist oder beschädigt wurde. In der Darstellung wurde beispielhaft die Nummer 22 als verlorenes Datenpaket gewählt.

Ebenso bedeutet in allen Figurteilen ein unterbrochener Pfeil, daß eine Bestätigung über den Erhalt eines Datenpaketes gesendet wird. Die Bestätigung wird im folgenden Acknowledgement genannt. Ein Acknowledgement gibt beispielsweise gemäß TCP an, welches nächste Datenpaket von einem Empfänger, der gesendeten Datenpakete erwartet, erwartet wird. So erwartet beispielsweise der Empfänger des erfolgreich gesendeten Datenpaketes 1, das Senden des Datenpaketes 2 was er durch Senden eines Acknowledgement ACK inklusive einer sogenannten Acknowledgement Nummer ACK2 angibt. Hierbei ist anzumerken, daß der Empfänger immer ein Acknowlegement für das nächste Datenpaket in der Reihenfolge sendet, also nach einem ersten Datenpaket 1 immer auf 2, nach einem zweiten Datenpaket immer auf 3 usw. Wenn ein in der Reihenfolge falsches Datenpaket erfolgreich empfangen wird, wird es zwar am Empfänger gespeichert, es wird aber kein Acknowledgement auf das nächste Datenpaket ausgelöst. Anstelle dessen wird weiter ein Acknowledge auf das fehlende Datenpaket ausgelöst.

Aus der Figur 4a läßt sich entnehmen, daß aus einem Netz zur Datenübermittlung hoher Geschwindigkeit, beispielsweise das Internet, Datenpakete gesendet werden. Dies ist durch die Pfeile von der linken Seite, der Seite von der aus die Datenpakete bereitgestellt werden, bis zur Mitte angezeigt. Gezeigt sind die Datenpakete 10 bis 21. Ebenfalls sind bereits die Datenpakete 1 bis 9 zur Verfügung gestellt worden, diese sind aber der Übersicht halber nicht gezeigt worden. Bei einer Anwendung aus dem Internet über ein schnurloses, paketorientiertes Datennetzwerk, beispielsweise dem GPRS Netzwerk, werden aufgrund der unterschiedlichen Bandbreite Datenpakete zum Senden zur Verfügung gestellt, ohne daß diese direkt weitergesendet werden. Die Anzahl der zum Senden zur Verfügung gestellten Datenpakete bestimmt sich durch eine festgelegte Fenstergröße F. Die Fenstergröße F und deren Anwendung ist ein aus dem Internet bekannter Mechanismus. Die Fenstergröße F ist hier wahlweise mit 10, also 10 Datenpakete groß, festgelegt worden. Demgemäß werden 10 Datenpakete zum Senden zur Verfügung gestellt und warten demgemäß auch auf das Senden. Weitere Datenpakete über die Anzahl 10 hinaus werden nicht zum Senden zur Verfügung gestellt, da sich das System, sobald es sich in einem sogenannten eingeschwungenen Zustand (self clocking) befindet, nur noch ein weiteres Datenpaket zur Verfügung stellt, wenn auch ein Datenpaket erfolgreich über das GPRS Netzwerk gesendet und das zugehörige Acknowledgement korrekt empfangen wurde. Dies ist angezeigt durch das Acknowledgement ACK2 des zweiten Datenpaketes das ein weiteres Bereitstellen des Datenpaketes 11 erlaubt, da ein Datenpaket, hier das erste Datenpaket, erfolgreich empfangen wurde.

Das Senden eines ersten Datenpaketes über das schnurlose, paketorientierte Datennetzwerk, also das GPRS ist angezeigt durch die Pfeile von der Mitte zum rechten Rand, der Empfängerseite. Hierbei deutet die vertikale Linie in der Mitte einen SGSN Knoten (Zwischenknoten), also einen Verbindungsknoten zwischen Internet und GPRS Netzwerk an. Während also bereits 10 Datenpakete von dem Internet zur Verfügung gestellt werden, wird erst das erste Datenpaket über das GPRS Netzwerk weitergesendet. Wenn das Datenpaket angekommen ist, wird eine Bestätigung über den Erhalt, das zuvor erläuterte Acknowledgement, gesendet. Dies ist durch die unterbrochenen Pfeile von der rechten Seite, Empfängerseite, zur linken Seite dargestellt. Der Übersicht halber sind die Pfeile, bis auf den Pfeil des Acknowledgement 2 ACK2, nur bis zum SGSN Knoten geführt. Wenn der Empfang eines Datenpaketes bestätigt wurde, wird ein weiteres Paket gesendet. In der Figur 4a wird hierzu das Acknowledgement2 ACK2 gesendet nach erfolgtem Senden des ersten Datenpaketes. Dies bedeutet, daß das erste Datenpaket erfolgreich gesendet wurde und das zweites Datenpaket erwartet wird.

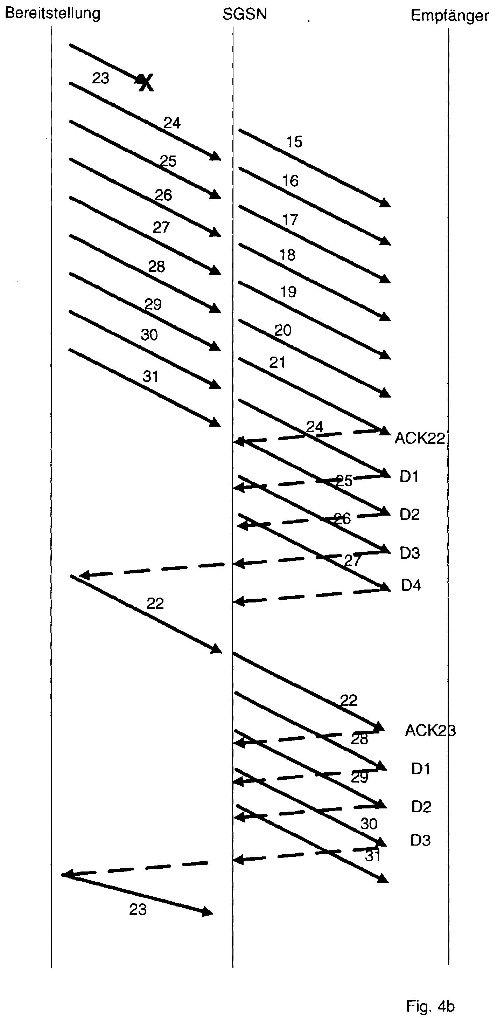

Gemäß Figur 4b wird dargestellt, daß zusätzlich zu dem Datenpaket 22 ein Datenpaket 23 bei der Übertragung verloren geht. Die weiteren Datenpakete 24 bis 31 werden wiederum zur Übertragung bereitgestellt. Von dem SGSN Knoten aus werden weitere Datenpakete gesendet. Dieses sind ist hier die Datenpakete 15 und folgende. Der Übersicht halber sind nicht alle Bestätigungen (Acknowledgment) aufgeführt.

Nach dem Senden des Datenpaketes 21 wird dieses bestätigt ACK22 und demgemäß wird das Senden des Datenpaketes 22 erwartet. Da das Datenpaket 22 nicht zur Verfügung gestellt ist, das Datenpaket 24 aber zum Senden zur Verfügung steht, wird dieses Datenpaket, als das nächste in der Reihenfolge der Bereitstellung, gesendet. Da zur vollständigen Übertragung aber immer noch das Datenpaket 22 fehlt und wie bereits zuvor erläutert das erfolgreiche Senden des Datenpaketes 24 nicht bestätigt wird bevor nicht das Datenpaket 22 empfangen wurde, wird eine wiederholte Bestätigung mit der Anforderung zum Senden des Datenpaketes 22 gesendet, das sogenannte Duplicate Acknowledgement D1. Hierbei steht die eins für die erste erneute Anforderung zum Senden des Datenpaketes. Im folgenden wird jede weitere Bestätigung mit der Anforderung zum Senden eines Datenpaketes kurz Anforderung genannt.

Nach dem Senden des Datenpaketes 25 wird eine zweite wiederholte Anforderung (Duplicate Acknowledgement) D2 und nach dem Senden des Datenpaketes 26 eine dritte wiederholten Anforderung (Duplicate Acknowledgement) D3 gesendet. Nach einer dritten aufeinanderfolgenden, wiederholten Anforderung (Duplicate Acknowledgement) D3 wird darauf geschlossen, daß das Datenpaket 22 verloren gegangen ist und das fehlende Datenpaket 22 wird neu angefordert. Daß nach der dritten wiederholten Anforderung das Datenpaket neu angefordert wird ist eine Festlegung, wie sie beispielsweise bei TCP gewählt wird. Eine Methode zur erneuten Anforderung ist hierbei beispielsweise der sogenannte Fast Retransmit Algorithmus.

Demgemäß wird nach dem Empfangen des Datenpaketes 26 das Datenpaket 22 neu angefordert. Dies steht dann beispielsweise nach dem Senden des Datenpaketes 27, das in der Zwischenzeit bereits gesendet wurde und ein weiteres wiederholtes Anfordern D4 ausgelöst hat, zum Senden bereit.

Gemäß der Erfindung wird das Datenpaket 22, das in der Reihenfolge nach dem Datenpaket 31 eintrifft, einsortiert. Durch das Sortieren wird festgestellt, daß das Datenpaket 22 in der Reihenfolge vor dem Datenpaket 31 kommt, ebenso wie vor dem Datenpaket 30 und 29 und 28. Da das Datenpaket 27 das Datenpaket ist, das aktuell gesendet wird, wird das Datenpaket 22 vor das Datenpaket 28 einsortiert. Nach dem beendeten Senden des Datenpaketes 27 steht das Datenpaket 22 zum Senden zur Verfügung gestellt.

Da wie zuvor erläutert, das Datenpaket 23 ebenfalls noch nicht gesendet wurde, wird eine Anforderung zum Senden des Datenpaketes 23 gesendet ACK23. Hierzu werden wie zuvor bei dem Datenpaket 22 erläutert, wiederum drei wiederholte Anforderungen D1, D2 und D3 gesendet, bevor das Datenpaket 23 erneut angefordert wird. Dieses steht danach zur Verfügung und kann direkt nach dem Bereitstellen und nach dem Datenpaket 31 gesendet werden. Nachdem das Datenpaket 23 erfolgreich empfangen wurde, wird in einem Speicher auf der Empfängerseite verglichen, welches Datenpaket bereits empfangen wurde, hier die Datenpakete bis zum Datenpaket 31. Danach werden weitere neue Datenpakete über die 31 hinaus angefordert werden, indem ein ACK32 ausgelöst wird.

Der Vollständigkeit halber soll noch erwähnt werden, daß, insbesondere bei TCP, bei dem Auftreten einer wiederholten Anforderung die Fenstergröße F neu berechnet wird. Dies dient dazu eine Überlastung eines Netzes zu verhindern, indem eine zu große Anzahl an Datenpaketen zum Senden bereitsteht, ohne daß diese gesendet werden. Die neue Fenstergroße F' berechnet sich folgendermaßen. Die alte Fenstergröße F wird halbiert und mit einem konstanten Wert k addiert.

$$F' = F/2 + k \qquad (1)$$

mit F= alte Fenstergröße
k = Konstante

Der konstante Wert wird hier mit 3 festgelegt. In dem Beispiel ergibt sich demgemäß die neue Fenstergröße F' zu

$$F' = 10/2 + 3 = 8$$

Dies bedeutet daß nur noch 8 Datenpakete zum Senden bereitgestellt werden können. Wie leicht ersichtlich reduziert sich die Fenstergröße bei jeder neuen Berechnung.

In dem hier vorliegenden Fall bedeutet dies, daß nach dem das Datenpaket 22 wiederholt angefordert wurde, nur noch 8 weitere Datenpaket bereitgestellt werden können. Die Zahl der möglichen bereitgestellten Datenpaket ist demgemäß 22 + 8 = 30. Da aber bereits das Datenpaket 31 bereitgestellt ist, kann kein neues Datenpaket über das Datenpaket 31 hinaus zum Senden bereitgestellt werden, da schon mehr Datenpakete vorhanden sind als vorhanden sein dürften gemäß der neuen Bestimmung der Fenstergröße.

Ohne den Einsatz der Erfindung wäre das Datenpaket 22 erst nach dem Senden des Datenpaketes 31 gesendet worden und zusätzlich wären keine weiteren Datenpakete über das Datenpaket 31 hinaus bereit gewesen. Da das Datenpaket 23 ebenfalls fehlte, hätte dies zum Stop der Übertragung, dem sogenannten TCP Time-out, geführt. Durch das Sortieren wird ein solcher Stop verhindert.

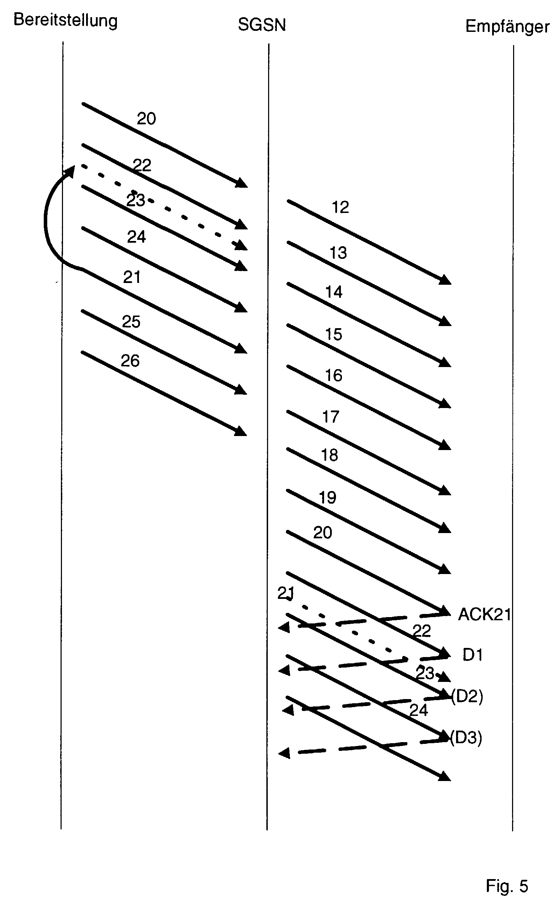

Im folgenden wird anhand von Figur 5 eine weitere Ausführung der Erfindung für den Fall erläutert, daß die Datenpakete falsch sortiert eintreffen.

Die Bezeichnungen und Bedeutungen der Figur 5 sollen den Bezeichnungen und Bedeutungen der Figuren 4a und 4b entsprechen. Gemäß Figur 5 werden die Datenpakete 20 bis 26 aufgeführt, die zum Senden bereit sind. Die Reihenfolge ist vertauscht, da das Datenpaket 21 erst nach dem Datenpaket 24 eintrifft. Von dem SGSN Knoten wird zum Zeitpunkt des Bereitstellens des Datenpaketes 20, das Datenpaket 12 gesendet. Nachdem das Datenpaket 20 gesendet wurde, wird der Empfang bestätigt und das Datenpaket 21 wird angefordert. Steht nun das Datenpaket 21 nicht zum Senden bereit, wird zuerst das in der Reihenfolge anstehende Datenpaket gesendet. In dem hier vorliegenden Fall das Datenpaket 22. Wie zuvor anhand von Figur 4 a und 4b erläutert, werden danach sogenannte wiederholte Aufforderungen gesendet und nach einer dritten solchen Aufforderung in Folge, wird eine neue Anforderung zum Bereitstellen übermittelt. Da das Datenpaket 21 in dem hier vorliegenden Fall aber nicht verloren gegangen ist, ist eine solche Aufforderung nicht notwendig und redundant.

Gemäß der vorliegenden Erfindung werden die in der falschen Reihenfolge eintreffenden Datenpakete gemäß ihrer Reihenfolge der Numerierung sortiert, wodurch eine Neuanforderung vermieden wird. Dies ist in der Figur durch den gepunkteten Pfeil angezeigt. Gemäß einer Ausführungsform wird nach dem ersten Auffordern zum Senden des Datenpaketes 21 ACK21 das Sortieren gestartet. Dies erfolgt während das weitere Datenpaket 22 bereits gesendet wird, weshalb das Datenpaket 21 vor das Datenpaket 23 sortiert wird. Da demgemäß erst ein erstes wiederholtes Anfordern D1 erfolgt ist, unterbleibt ein erneutes Bereitstellen. In der Figur ist das durch das in Klammern gesetzte D2 und D3 dargestellt, daß gemäß der Erfindung nicht mehr erfolgt.

Eine weitere Ausführungsform ist (ohne Figur), daß zu jeder Zeit die Datenpakete sortiert werden. Hierbei wird ermöglicht, daß alle Datenpakete immer in der richtigen Reihenfolge vorliegen und nicht erst bei Auftreten eines Fehlers sortiert wird. Ebenso kann gemäß einer Ausführungsform eine festgelegte Anzahl von Datenpaketen sortiert werden und erst wieder nach dem Übertragen der solcherart sortierten Datenpaket werden neue Datenpaket sortiert. Dies kann entweder vor dem Senden eines ersten Datenpaketes vorgenommen werden oder während des Sendens eines ersten Datenpaketes.

Der Vollständigkeit halber wird erwähnt, daß ein gemeinsames Auftreten des Fehlens von Datenpaketen und der fehlerhaften Reihenfolge ebenfalls möglich ist. Hierbei kann zusätzlich auf das Verfahren gemäß der Figuren 4a und 4b verwiesen werden.

Im folgenden wird auf die Sortiermechanismen eingegangen (ohne Figur). Zum Sortieren der zum Senden bereitgestellten Datenpakete, wird eine Identifikationsnummer eines jeden Datenpaketes ermittelt. Diese Identifikationsnummer gibt die Reihenfolge der Datenpakete an. Anhand dieser Identifikationsnummer werden die Datenpaket sortiert.

Gemäß einer Ausführungsform, wird zusätzlich zu der Identifikationsnummer eine Länge des Datenpaketes bestimmt. Hierbei wird anhand der Länge der Dateninhalt, also die vorhandene Menge an Daten bestimmt.

Gemäß der Ausführungsbeispiele wird bei der Anwendung von Internetanwendungen eine TCP (Transmission Control Protokoll)-Sequenznummer als Identifikationsnummer verwendet. Eine Folge von TCP-Sequenznummer sieht beispielsweise folgendermaßen aus: 1; 1025; 2049; 3073; 4097 etc. Zusätzlich ist eine Prioritätenliste vorhanden, anhand deren die Nummern der aufeinanderfolgenden ersten Bytes bestimmt werden, beispielsweise daß die 1025 direkt auf die 1 folgt ohne daß ein weiteres Datenpaket dazwischen existiert. Daraus ergibt sich, daß die 1 das erste Datenpaket angibt, die 1025 das zweite Datenpaket, die 2049 das dritte Datenpaket, etc..

Eine weitere Möglichkeit der Bestimmung ist die Ermittlung der TCP-Squenznummer und der sogenannten IP-totale-Länge (IP-total-length) Information. Die IP-totale Länge Information setzt sich aus festgelegten Längen, wie z.B.20 Byte für einen Header plus 20 Byte für TCP und der eigentlichen Datenlänge zusammen. Hierbei werden von der IP-totale Länge Information 20 + 20 Byte = 40 Byte abgezogen, woraus sich die Länge der Daten ermitteln läßt und auf das folgende Datenpaket geschlossen werden kann.

Die zuvor erläuterten Möglichkeiten der Bestimmung werden ebenfalls auf die Bestimmung eines doppelt oder mehrfach zur Verfügung gestellten Datenpaketes angewendet. Ein mehrfach zur Verfügung gestellt Datenpaket wird beispielsweise anhand der TCP-Sequenznummer als Identifikationsnummer erkannt und kann somit aussortiert werden.

Im folgenden wird (ohne Figur) die erfindungsgemäße Vorrichtung erläutert. Eine Vorrichtung zur Erhöhung eines Datendurchsatzes bei Anwendungen aus Netzen zur Datenübermittlung hoher Geschwindigkeit, wie dem Internet über ein paketorientiertes, schnurloses Datennetzwerk, wie einem GPRS Netzwerk weist Mitteln zur Bereitstellung von Daten in Form einer Vielzahl aufeinanderfolgender Datenpakete (n,n+1,n+2,...,n+x) auf. Die Datenpaket werden beispielsweise an dem SGSN Knoten bereitgestellt.

Ebenfalls weist die Vorrichtung zur Erhöhung des Datendurchsatzes Mittel zur Bereitstellung der Datenpakete in der Reihenfolge des Eintreffens (n,n+2,n+3,n+1,...) auf. Dies erfolgt ebenfalls wie bereits zuvor erläutert beispielsweise im SGSN Knoten.

Ferner weist die Vorrichtung Sendemittel zum Senden eines ersten und jeden weiteren Datenpaketes (n, n+1,.... ) über das paketorientierte, schnurlose Datennetzwerk auf.

Die Vorrichtung weist des weiteren Mitteln zum Sortieren weiterer, bereits während des Sendens eines ersten oder jeden weiteren Datenpaketes zur Verfügung gestellten Datenpakete (n+2,n+3,n+1,...) auf. Die Datenpaket werden entsprechend der von der Anwendung, beispielsweise der von der Internetanwendung, bereitgestellten Reihenfolge sortiert. Wie zuvor bereits erläutert, kann ein Sortieren beispielsweise auf der LLC-Protokollebene und/oder auf SNDCP (Subnetwork Dependent Convergence Protocoll) - Ebene erfolgen. Ebenfalls wird der Vollständigkeit halber nochmals erwähnt daß mittels der Mittel bei dem Senden eines ersten oder bei jedem weiteren Datenpaket sortiert werden kann.

Ein doppelt oder mehrfach vorhandenes Datenpaket wird anhand von Mitteln zum Aussortieren doppelter oder mehrfach vorhandener Datenpaketes aussortiert. Ebenfalls erfolgt eine Ermittlung der doppelt oder mehrfach vorhandenen Datenpakete, beispielsweise anhand einer Identifikationsnummer des Datenpaketes.

In den aufgeführten Beispielen wurde als schnurloses, paketorientiertes Datennetzwerk das GPRS Netzwerk erläutert und das UMTS Netzwerk erwähnt. Aber jedes weitere Datennetzwerk, beispielsweise ein ATM Netzwerk entspricht ebenfalls dem genannten paketrorientierten Netzwerk und stellt ein Anwendungsfeld der Erfindung dar.

Ebenfalls wurde in den aufgeführten Beispielen das Internet erwähnt. Hier ist ebenfalls jedes weitere Netzwerk zur Übermittlung von Daten in hoher Geschwindigkeit aufzuführen. Lediglich ist das Internet das derzeit bestbekannt Netz mit den Voraussetzungen.

**Patentansprüche**

1.  Verfahren zur Erhöhung eines Datendurchsatzes bei Anwendungen aus Netzen zur Datenübermittlung hoher Geschwindigkeit (Internet) über ein paketorientiertes, schnurloses Datennetzwerk (GPRS),

    - bei dem von der Anwendung Daten in Form einer Vielzahl aufeinanderfolgender Datenpakete (n,n+1,n+2,...,n+x) bereitgestellt werden,
    - bei dem die Datenpakete dem paketorientierten, schnurlosen Datennetzwerk in der Reihenfolge des Eintreffens (n,n+2,n+3,n+1,...) zur Verfügung gestellt werden, und
    - bei dem während des Sendens eines ersten Datenpaketes (n) über das paketorientierte, schnurlose Datennetzwerk, weitere bereits zur Verfügung gestellte Datenpakete (n+2,n+3,n+1,...), entsprechend der von der Anwendung bereitgestellten Reihenfolge (n+1,n+2,n+3,...) sortiert werden.

2.  Verfahren nach Anspruch 1,

    - bei dem während des Sendens eines jeden weiteren Datenpaketes, alle weiteren zur Verfügung gestellten Datenpakete sortiert werden.

3.  Verfahren nach Anspruch 1,

    - bei dem ein weiteres Sortieren der Datenpakete während des Sendens eines Datenpaketes n + P', mit P' = 1,2,3 erfolgt.

4.  Verfahren nach einem der Ansprüche 1 bis 3,

    - bei dem die in der Reihenfolge des Eintreffens zur Verfügung gestellten Datenpakete (n,n+2,n+3,n+1,...), neu angeforderte und empfangene Datenpakete enthält.

5.  Verfahren nach einem der Ansprüche 1 bis 4,

    - bei dem eine Identifikationsnummer eines jeden Datenpaketes ermittelt wird, und
    - bei dem die Datenpakete entsprechend der Identifikationsnummer sortiert werden.

6.  Verfahren nach einem der Ansprüche 1 bis 4,

    - bei dem eine Identifikationsnummer eines jeden Datenpaketes ermittelt wird und eine Länge eines jeden Datenpaketes ermittelt wird, und
    - bei dem mittels der Länge eines Datenpaketes auf die Identifikationsnummer des folgenden Datenpaketes geschlossen wird.

**7.** Verfahren nach einem der Ansprüche 1 bis 6,

- bei dem die Anwendungen aus Netzen zur Datenübermittlung, Internetanwendungen sind.

**8.** Verfahren nach Anspruch 7,

- bei dem das paketorientierte, schnurlose Datennetzwerk ein nach dem GPRS-Verfahren arbeitendes Netzwerk ist.

**9.** Verfahren nach Anspruch 7,

- bei dem das paketorientierte, schnurlose Datennetzwerk ein nach dem UMTS-Verfahren arbeitendes Netzwerk ist.

**10.** Verfahren nach Anspruch 8 oder 9,

- bei dem das Sortieren in einem Diensteunterstützungsknoten (SGSN) auf einer LLC (Logical Link Control)-Protokollebene und/oder einer SNDCP (Subnetwork Dependent Convergence Protocoll) -Ebene erfolgt.

**11.** Verfahren nach Anspruch 5,

- bei dem die Identifikationsnummer eine TCP (Transmission Control Protokoll)-Sequenznummer ist.

**12.** Verfahren nach Anspruch 6,

- bei dem die Länge aus der IP(Internet Protokoll)-totale-Länge Information bestimmt wird.

**13.** Vorrichtung zur Erhöhung eines Datendurchsatzes bei Anwendungen aus Netzen zur Datenübermittlung hoher Geschwindigkeit (Internet) über ein paketorientiertes, schnurloses Datennetzwerk (GPRS), mit

- Mitteln zur Bereitstellung von Daten in Form einer Vielzahl aufeinanderfolgender Datenpakete (n,n+1,n+2,...,n+x),
- Mitteln zur Bereitstellung der Datenpakete in der Reihenfolge des Eintreffens (n,n+2,n+3,n+1,...),
- Sendemitteln zum Senden eines ersten und jeden weiteren Datenpaketes (n, n+1,....) über das paketorientierte, schnurlose Datennetzwerk, und
- Mitteln zum Sortieren weiterer, bereits während des Sendens eines ersten Datenpaketes zur Verfügung gestellten Datenpakete (n+2,n+3,n+1,...), entsprechend der von der Anwendung bereitgestellten Reihenfolge.

**14.** Vorrichtung nach Anspruch 13,

- mit Mitteln zum Aussortieren von Datenpaketen.

**15.** Vorrichtung nach Anspruch 13 oder 14,

- mit Mitteln zum Ermitteln einer Identifikationsnummer eines Datenpaketes,
- und mit Mitteln zur Ermittlung einer Länge (L) eines Datenpaketes.

Bereitstellung von Datenpaketen
n,n+1,n+2,n+3,... — a

Übertragung der Datenpakete — b

Verfügbarkeit der Datenpakete gemäß Eintreffen
n, n+2,n+3,n+1,... — c

Senden eines Datenpaketes n — d

Ermittlung der Reihenfolge der N' weiteren
Datenpakete n+2,n+3,n+1,... — e

Sortieren der N' weiteren Datenpakete — f

Fig. 1

Bereitstellung von Datenpaketen
n,n+1,n+2,n+3,...  a

Übertragung der Datenpakete  b

Verfügbarkeit der Datenpakete gemäß Eintreffen
n, n+2,n+3,n+1,...  c

Senden eines Datenpaketes n  d

Ermittlung der Reihenfolge der N' weiteren
Datenpakete n+2,n+3,n+1,...  e

Ermittlung eines doppelten Datenpaketes
Aussortieren eines doppelten Datenpaketes  g

Sortieren der N' weiteren Datenpakete  f

Fig. 2

Fig. 3

Bereitstellung          SGSN          Empfänger

Fig. 4a

Bereitstellung          SGSN          Empfänger

23

24      15

25      16

26      17

27      18

28      19

29      20

30      21

31

24      ACK22

25      D1

26      D2

D3

27      D4

22

22

ACK23

28      D1

29      D2

30      D3

31

23

Fig. 4b

Bereitstellung    SGSN    Empfänger

Fig. 5

Europäisches
Patentamt

**EUROPÄISCHER RECHERCHENBERICHT**

Nummer der Anmeldung

EP 98 10 8681

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| Y<br><br><br>A | REUVEN COHEN, SRINIVAS RAMANATHAN: "Using proxies to enhance TCP performance over hybrid fiber coaxial networks" COMPUTER COMMUNICATIONS,Januar 1998, Seiten 1502-1518, XP002081347<br>* Seite 1505, rechte Spalte, Absatz 2.2.2. - Seite 1506, rechte Spalte, Absatz 3. *<br><br>--- | 1-3,5,7, 11,13,14 | H04L12/56 H04L29/06 |
| Y | BALAKRISHNAN H ET AL: "IMPROVING RELIABLE TRANSPORT AND HANDOFF PERFORMANCE IN CELLULAR WIRELESS NETWORKS" WIRELESS NETWORKS, Bd. 1, Nr. 4, 1. Dezember 1995, Seiten 469-481, XP000543510<br>* Seite 470, linke Spalte, Absatz 2. - Seite 471, linke Spalte, Absatz 3. *<br>* Seite 472, linke Spalte, Absatz 3.I.1. - rechte Spalte, Absatz 3.1.2. *<br>--- | 1-3,5,7, 11,13,14 | |
| Y<br><br><br><br><br><br>A | US 5 127 000 A (HENRION MICHEL A R) 30. Juni 1992<br>* Zusammenfassung *<br>* Spalte 1, Zeile 6 - Zeile 55 *<br>* Spalte 3, Zeile 18 - Zeile 60 *<br>* Spalte 4, Zeile 24 - Zeile 35 *<br>* Spalte 6, Zeile 45 - Zeile 56 *<br>* Spalte 12, Zeile 41 - Zeile 59 *<br>* Ansprüche 1,2,6,12 *<br><br>--- | 1-3,5,7, 11,13,14 | RECHERCHIERTE SACHGEBIETE (Int.Cl.6)<br><br>H04L<br>H04Q |
| Y<br><br><br>A | US 5 253 251 A (ARAMAKI TOSHIYA) 12. Oktober 1993<br>* Zusammenfassung *<br>* Spalte 1, Zeile 41 - Spalte 2, Zeile 4 *<br>* Spalte 2, Zeile 60 - Spalte 6, Zeile 68 *<br><br>--- | 1-3,5,7, 11,13,14 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 20. Oktober 1998 | Vaskimo, K |

EP 0 957 613 A1

**EUROPÄISCHER RECHERCHENBERICHT**

Europäisches
Patentamt

Nummer der Anmeldung

EP 98 10 8681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 224 895 A (AMERICAN TELEPHONE AND TELEGRAPH COMPANY) 10. Juni 1987<br>* Seite 1, Zeile 4 - Zeile 11 *<br>* Seite 3, Zeile 13 - Seite 7, Zeile 23 *<br>* Seite 12, Zeile 29 - Seite 20, Zeile 17 *<br>* Seite 22, Zeile 34 - Seite 23, Zeile 16 *<br>* Anspruch 1 * | 1-3,5,7, 11,13,14 | |
| A | | | |
| A | AJAY BAKRE, B.R. BADRINATH: "Handoff and System Support for Indirect TCP/IP"<br>1995 MOBILE AND LOCATION-INDEPENDENT COMPUTING SYMPOSIUM, Seiten 11-24, XP000764772<br>* Seite 11, linke Spalte, Absatz 1 - Seite 13, linke Spalte, Absatz 2.2 *<br>* Abbildung 1 * | 1,13 | |
| A | AJAY BAKRE ET AL: "I-TCP: INDIRECT TCP FOR MOBILE HOSTS"<br>PROCEEDINGS OF THE INTERNATIONAL CONFERENCE ON DISTRIBUTED COMPUTIN SYSTEMS, VANCOUVER, MAY 30 - JUNE 2, 1995, Nr. CONF. 15, 30. Mai 1995, Seiten 136-143, XP000530804<br>INSTITUTE OF ELECTRICAL AND ELECTRONICS ENGINEERS<br>* Zusammenfassung *<br>* Seite 136, linke Spalte, Absatz 1 - Seite 137, rechte Spalte, Absatz 3.2 *<br>* Seite 138, Absatz 3.3 *<br>-/-- | 1,13 | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 20. Oktober 1998 | Vaskimo, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**Europäisches Patentamt**

# EUROPÄISCHER RECHERCHENBERICHT

Nummer der Anmeldung

EP 98 10 8681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO 92 16080 A (UNIV WASHINGTON) 17. September 1992<br>* Seite 1, Zeile 2 – Seite 4, Zeile 7 *<br>* Seite 5, Zeile 28 – Seite 6, Zeile 33 *<br>* Anspruch 1 * | 1,13 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 20. Oktober 1998 | Vaskimo, K |

EPO FORM 1503 03.82 (P04C03)